Europäisches Patentamt

European Patent Office

Office européen des brevets

(11) Veröffentlichungsnummer: **0 262 631**
**A2**

(12) **EUROPÄISCHE PATENTANMELDUNG**

(21) Anmeldenummer: **87114102.4**

(22) Anmeldetag: **26.09.87**

(51) Int. Cl.⁴: **G02B 6/38**

(30) Priorität: **01.10.86 DE 3633340**

(43) Veröffentlichungstag der Anmeldung:
**06.04.88 Patentblatt 88/14**

(84) Benannte Vertragsstaaten:
**DE FR GB**

(71) Anmelder: **Standard Elektrik Lorenz Aktiengesellschaft Lorenzstrasse 10 D-7000 Stuttgart 40(DE)**

(84) **DE**

(71) Anmelder: **ALCATEL N.V. Strawinskylaan 537 (World Trade Center) Amsterdam(NL)**

(84) **FR GB**

(72) Erfinder: **Müller, Hermann Mörikestrasse 7 D-7014 Kornwestheim(DE)**
Erfinder: **Stiepek, Wolfgang Witikoweg 35 D-7000 Stuttgart 40(DE)**

(74) Vertreter: **Gähr, Hans-Dieter, Dipl.-Ing. (FH) et al Standard Elektrik Lorenz AG Patent- und Lizenzwesen Postfach 30 09 29 D-7000 Stuttgart 30(DE)**

(54) **Kupplungsvorrichtung für Lichtwellenleiter.**

(57) Bei der Kupplungsvorrichtung (1) wird ein Gehäuse (2) verwendet, das für die Aufnahme von zwei Faserendhülsen (4) eine V-Nut (11) enthält. Pro Hülsenaufnahme endet oberhalb der V-Nut (11) die Klemmplatte (15) eines Druckteiles (14), dessen Schaftende (13) in einem Durchbruch (12) der Deckplatte (8) des Gehäuses (2) verdrehsicher geführt ist. Im Schaftende (13) steckt eine von außerhalb des Gehäuses (2) betätigbare Schraube (16). Außerdem ist zwischen Klemmplatte (15) und Deckplatte (8) ein Federelement (18) eingespannt.

Bei gelöster Schraube (16) wird die Klemmplatte (15) vom Federelement (18) gegen eine in die Aufnahme gesteckte Faserendhülse (4) angedrückt und bei angezogener Schraube (16) von der Faserendhülse (4) abgehoben.

FIG. 1

## Kupplungsvorrichtung für Lichtwellenleiter

Die Erfindung betrifft eine Kupplungsvorrichtung der im Oberbegriff des Anspruchs 1 näher bezeichneten Ausführung. Derartige Vorrichtungen werden in der optischen Nachrichten-Übertragungstechnik zur lösbaren Kopplung von Faserendhülsen verwendet, die zentrisch fixierte, Lichtwellen leitende Kunststoff-oder Glasfasern enthalten.

Eine Kupplungsvorrichtung nach dem Oberbegriff des Anspruchs 1 ist bereits aus der DE-OS 30 25 888 bekannt. Die Vorrichtung besteht aus einem hülsenförmigen Gehäuse, in dem ein Prisma befestigt ist, auf dem hintereinander zwei Klemmbrücken liegen. Über den Klemmbrücken weist das Gehäuse eine in zwei Kammern unterteilte Ausnehmung auf, in denen Zylinderrollen quer zur Längsachse des Gehäuses angeordnet sind. Die Anzahl der Zylinderrollen ist so bemessen, daß von außen jeweils ein Druckstück in die Ausnehmung eingreifen kann. Der mittels Betätigung endseitiger Schraubkappen erzeugte Druck wird jeweils über eine Druckscheibe auf das Druckstück sowie auf die Zylinderrollen und von diesen auf die Klemmbrücke übertragen.

Um bei gelösten Schraubkappen ein kraftfreies Einstecken und Herausziehen der Faserendhülsen zu gewährleisten, sind bei einer aus der DE-OS 32 08 797 bekannten Kupplungsvorrichtung zwischen Prisma und Klemmbrücken seitlich Blattfedern angeordnet, welche die Teile in auseinandergedrückter Lage halten. Je nachdem wie fest die Schraubkappen angezogen werden, wird ein mehr oder weniger starker Klemmdruck auf die in der V-Nut des Prisma liegenden Faserendhülsen ausgeübt.

Der Erfindung liegt die Aufgabe zugrunde, die Kupplungsvorrichtung gemäß Oberbegriff des Anspruchs 1 so zu verbessern, daß die Faserendhülsen kraftfrei gesteckt und gezogen sowie mit einem von der Betätigung des Benutzers unabhängigen Klemmdruck fixiert werden können. Diese Aufgabe wird erfindungsgemäß durch die im kennzeichnenden Teil dieses Anspruchs angegebenen konstruktiven Maßnahmen gelöst. Vorteilhafte Ausgestaltungen der Kupplungsvorrichtung gehen aus den Unteransprüchen hervor. Mit einer solchen Kupplungsvorrichtung erzielbare Vorteile sind in der Beschreibung genannt.

Die Erfindung wird anhand eines in einer Zeichnung dargestellten Ausführungsbeispieles wie folgt näher beschrieben. In der Zeichnung zeigen:

Fig. 1 eine Kupplungsvorrichtung mit eingesetzten Steckern, teilweise längsgeschnitten, in der Seitenansicht;

Fig 2 die Kupplungsvorrichtung der Fig. 1, teilweise quergeschnitten, in der Vorderansicht;

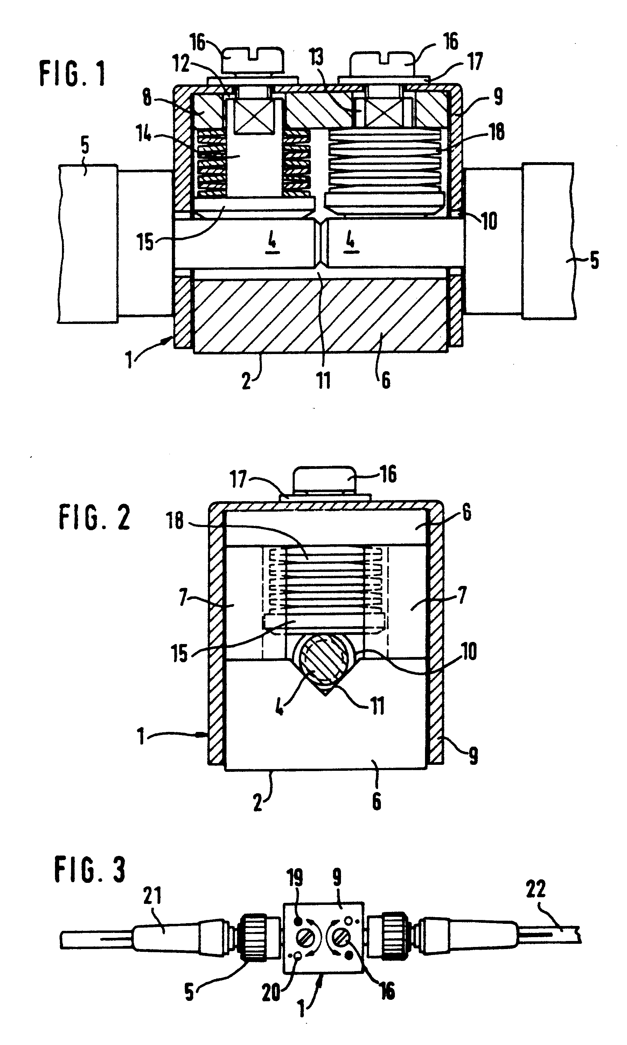

Fig. 2 eine vollständige Kupplungsvorrichtung mit eingesetzten Steckern, in der Draufsicht.

In den Fig. 1 bis 3 ist die Kupplungvorrichtung allgemein mit 1 bezeichnet. Sie weist ein quaderförmiges Gehäuse 2 auf, das in Längsrichtung von wenigstens einer Aufnahme für die als Stifte ausgebildeten Faserendhülsen 4 von Steckern 5 durchsetzt wird. Das Gehäuse 2 besteht im wesentlichen aus einer als Prisma ausgebildeten Grundplatte 6, zwei an deren Längsseiten aufragenden Stützwänden 7 und einer den oberen Abschluß bildenden Deckplatte 8. Das Ganze ist mittels einer übergeschobenen Schutzkappe 9 abgedeckt. Sie enthält auf zwei sich gegenüberstehenden Seiten je eine mit der Aufnahme des Gehäuses 2 fluchtende Einsecköffnung 10 und zwei die Schutzkappe 9 oben durchdringende Löcher, welche der V-Nut 11 der Grundplatte 6 zugeordnet sind, die den Boden der Aufnahme bildet.

Die Löcher in der Schutzkappe 9 oben fluchten mit im Querschnitt größeren Durchbrüchen 12 in der Deckplatte 8 darunter. In jedem dieser Durchbrüche 12 steckt das Schaftende 13 eines verdrehsicher geführten Druckteiles 14, dessen zur V-Nut 11 gerichtetes unteres Ende mit einer z.B. als Druckteller ausgebildeten Klemmplatte 15 abschließt. In das eine Gewindebohrung enthaltende Schaftende 13 ist eine das Loch der Schutzkappe 9 durchsetzende Schraube 16 eingedreht, zwischen deren Kopf und der Schutzkappe 9 zweckmäßigerweise eine Beilegscheibe 17 eingefügt ist. Zwischen der Klemmplatte 15 des Druckteiles 14 und der Deckplatte 8 des Gehäuses 2 ist ein Federelement 18 eingespannt.

Das Federelement besteht vorzugsweise aus einer geschichteten Tellerfedersäule, welche die Klemmplatte 15 bei nicht angezogener Schraube 16 und bei einem in die Kupplungsvorrichtung 1 eingeführten Stecker 5 gegen die Faserendhülse 4 und diese mit definierter Kraft in die V-Nut 11 drückt. Wird die zur Steckrichtung der Faserendhülse 4 senkrecht wirkende Schraube 16 fest angezogen, hebt die Klemmplatte 15 von der Faserendhülse 4 ab und der Stecker 5 kann unbelastet aus der Aufnahme herausgezogen werden. Auf der Schutzkappe 9 ist die Drehrichtung mit einer Anzeige der gespannten und entspannten Klemmstellung mittels Markierungen 19, 20 unverwechselbar dargestellt.

Die Einstecköffnungen 10 in der Schutzkappe 9 und der Hub der Klemmplatte 15 des Druckteiles 14 sind so groß bemessen, daß wahlweise Paare von Faserendhülse 4 mit 2,5 mm oder 3,5 mm Durchmesser gesteckt werden können. Außerdem ist die Klemmkraft, mit der die Faserendhülsen 4 in der Aufnahme gehalten werden sollen, durch Bestückung des Druckteiles 14 mit entsprechenden Federelementen 18 veränderbar. Eine Selbstlösung der Klemmung ist ausgeschlossen. Somit steht eine robuste, funktionssichere Kupplungsvorrichtung 1 zur Verfügung, die eine schnelle Handhabung beim Koppeln und Entkoppeln der Stecker 5 gestattet.

Die rückwärtig vorzugsweise einen Knickschutz 21 aufweisenden Stecker 5 sind jeweils mit einer Lichtleitader 22 verbunden, die beispielsweise eine Monomode- oder Multimodefaser enthält. Da das Einsetzen und Ziehen der Stecker 5 kräftefrei vornehmbar ist und das Spannen sowie Lösen der Klemmverbindungen nicht mehr von der Geschicklichkeit des Betätigers abhängt, arbeitet die Kupplungsvorrichtung 1 praktisch verschleißfrei. Sie erreicht dadurch eine hohe Lebensdauer.

Die Kupplungsvorrichtung 1 ist außerdem mit relativ geringen Kosten herstellbar. Außer der V-Nut 11, die zwar mit hoher Präzision, aber ohne besonderen Aufwand durch Schleifen herstellbar ist, können alle anderen Einzelteile, soweit diese nicht ohnehin handelsüblich sind, mit in der Feinwerktechnik allgemein üblichen Toleranzen gefertigt werden. Die quaderförmige Ausbildung des Gehäuses 2 gestattet es schließlich, mehrere Kupplungsvorrichtungen 1 lückenlos nebeneinander anzuordnen, diese beispielsweise in Kassetten einzusetzen oder an Montageplatten zu schrauben, ohne hierdurch die Handhabbarkeit der Stecker 5 zu beeinträchtigen.

**Ansprüche**

1. Kupplungsvorrichtung für in Faserendhülsen gefaßte Lichtwellenleiter mit einem Gehäuse, das von wenigstens einer eine V-Nut aufweisenden Aufnahme durchsetzt ist und in dem jeder Faserendhülse ein Druckteil, eine Klemmplatte und ein Spannmittel zugeordnet ist, welche ein voneinander unabhängiges Klemmen und Lösen der in die Aufnahme gesteckten Faserendhülsen gestatten, **dadurch gekennzeichnet,** daß das Spannmittel ein zwischen Klemmplatte (15) und einer Deckplatte (8) des Gehäuses (2) eingespanntes Federelement (18) ist, daß das Druckteil (14) mit einer von außerhalb des Gehäuses (2) senkrecht zur Steckrichtung betätigbaren Schraube (16) in Eingriff steht und daß die Klemmplatte (15) bei gelöster Schraube (16) vom Federelement (18) gegen eine in die Aufnahme gesteckte Faserendhülse (4) angedrückt und bei angezogener Schraube (16) von der Faserendhülse (4) abgehoben ist.

2. Kupplungsvorrichtung nach Anspruch 1, dadurch gekennzeichnet, daß das Gehäuse (2) aus einer die V-Nut (11) enthaltenden Grundplatte (6) mit seitlichen Stützwänden (7) und der auf den Stützwänden (7) angeordneten Deckplatte (8) besteht.

3. Kupplungsvorrichtung nach Anspruch 1 und 2, dadurch gekennzeichnet, daß ein rückwärtiges Schaftende (13) des Druckteiles (14) verdrehsicher in einem Durchbruch (12) der Deckplatte (8) geführt ist und dessen unteres Schaftende mit der Klemmplatte (15) abschließt.

4. Kupplungsvorrichtung nach einem der Ansprüche 1 bis 3, dadurch gekennzeichnet, daß das Federelement (18) aus zu einer Säule geschichteten Tellerfedern besteht.

5. Kupplungsvorrichtung nach einem der Ansprüche 1 bis 4, dadurch gekennzeichnet, daß das Gehäuse (2) eine von den Spannschrauben (16) durchsetzte Schutzkappe (9) aufweist.

6. Kupplungsvorrichtung nach Anspruch 5, dadurch gekennzeichnet, daß auf der Schutzkappe (9) die Drehrichtung der Schrauben (16) sowie die gespannte und entspannte Klemmstellung mittels Markierungen (19, 20) dargestellt ist.

**FIG. 1**

**FIG. 2**

**FIG. 3**

H. Müller 2-3